(19) Europäisches Patentamt
European Patent Office
Office européen des brevets

(11) EP 1 526 773 B1

(12) EUROPEAN PATENT SPECIFICATION

(45) Date of publication and mention of the grant of the patent:
**17.12.2008 Bulletin 2008/51**

(21) Application number: **03765083.5**

(22) Date of filing: **22.07.2003**

(51) Int Cl.:
***A01N 43/80*** *(2006.01)*

(86) International application number:
**PCT/EP2003/007983**

(87) International publication number:
**WO 2004/008861 (29.01.2004 Gazette 2004/05)**

# (54) SYNERGISTICALLY ACTING HERBICIDAL MIXTURES

SYNERGISTISCHE HERBIZIDE ZUSAMMENSETZUNGEN

MELANGES HERBICIDES AGISSANT DE FA ON SYNERGIQUE

(84) Designated Contracting States:
**AT BE BG CH CY CZ DE DK EE ES FI FR GB GR HU IE IT LI LU MC NL PT RO SE SI SK TR**

(30) Priority: **23.07.2002 US 397618 P**

(43) Date of publication of application:
**04.05.2005 Bulletin 2005/18**

(73) Proprietor: **BASF SE**
**67056 Ludwigshafen (DE)**

(72) Inventors:
- **KIBLER, Elmar**
  **67454 Hassloch (DE)**
- **O'NEAL, William, B.**
  **Chapel Hill, NC 27516 (US)**
- **WITSCHEL, Matthias**
  **67098 Bad Dürkheim (DE)**
- **VANTIEGHEM, Herve, R.**
  **76297 Stutensee-Staffort (DE)**

(56) References cited:
**WO-A-99/65314** **US-A- 5 030 271**

- **DATABASE CA [Online] CHEMICAL ABSTRACTS SERVICE, COLUMBUS, OHIO, US; RILEY, DENNIS G. ET AL: "Influence of imazapyr on the control of pitted morningglory (Ipomoea lacunosa) and johnsongrass (Sorghum halepense) with chlorimuron, imazaquin, and imazethapyr" retrieved from STN Database accession no. 110:35249 XP002257549 & WEED SCIENCE (1988), 36(5), 663-6 ,**
- **DATABASE CA [Online] CHEMICAL ABSTRACTS SERVICE, COLUMBUS, OHIO, US; RILEY, DENNIS G. ET AL: "Johnsongrass (Sorghum halepense) and pitted morningglory (Ipomoea lacunosa) control with imazaquin and imazethapyr" retrieved from STN Database accession no. 110:227082 XP002257550 & WEED TECHNOLOGY (1989), 3(1), 95-8 ,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 526 773 B1

## Description

The present invention relates to a synergistic herbicidal mixture comprising

A) at least one 3-heterocyclyl-substituted benzoyl derivative of the formula I

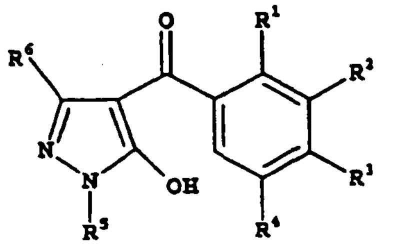

I

in which the variables have the following meanings:

- $R^1$, $R^3$ are halogen, $C_1$-$C_6$-alkyl, $C_1$-$C_6$-haloalkyl, $C_1$-$C_6$- alkoxy, $C_1$-$C_6$-haloalkoxy, $C_1$-$C_6$-alkylthio, $C_1$-$C_6$-alkylsulfinyl or $C_1$-$C_6$-alkylsulfonyl;
- $R^2$ is a heterocyclic radical selected from the group: isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, it being possible for the six radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
- $R^4$ is hydrogen, halogen or $C_1$-$C_6$-alkyl;
- $R^5$ is $C_1$-$C_6$-alkyl
- $R^6$ is hydrogen or $C_1$-$C_6$-alkyl;

or one of its environmentally compatible salts;
and

B) two herbicides selected from the group including imazapyr, imazaquin, imazamethabenz-methyl, imazamox, imazapic and imazethapyr;
or one of its environmentally compatible salts;
and

C) at least one herbicidal compound from the groups

- C9 lipid biosynthesis inhibitors:
  anilides, chloroacetanilides, thioureas, benfuresate or perfluidone; or
- C12 photosynthesis inhibitors:
  propanil, pyridate, pyridafol, benzothiadiazinones, dinitrophenols, dipyridylenes, ureas, phenols, chloridazon, triazines, triazinones, uracils or biscarbamates;
  or their environmentally compatible salts:

in a synergistically effective amount.

The invention furthermore relates to herbicidal compositions comprising a herbicidally active amount of a synergistic herbicidal mixture as defined above and at least one liquid and/or solid carrier and, if desired, at least one surfactant.

Moreover, the invention relates to processes for the preparation of these compositions and to a method of controlling undesirable vegetation.

In crop protection products, it is always desirable to increase the specific activity of an active ingredient and the reliability of action. It is an object of the present invention to increase the activity and/or selectivity of the herbicidally active 3-heterocyclyl-substituted benzoyl derivatives of the formula I against undesirable harmful plants.

We have found that this object is achieved by the mixtures defined at the outset. We have furthermore found herbicidal compositions which comprise these mixtures, processes for their preparation, and methods of controlling undesirable vegetation. In the last-mentioned cases, it is irrelevant whether the herbicidally active compounds of the components A), B) and

C) are formulated and applied jointly or separately and in which sequence they are applied in the case of separate application.

The mixtures according to the invention show a synergistic effect; the compatibility of the herbicidally active compounds of components A), B) and C) for certain crop plants is generally retained.

Suitable components C are

C9: Lipid biosynthesis inhibitors which are used are, inter alia, anilides, chloroacetanilides, thioureas, benfuresate or perfluidone.

C12: Suitable photosynthesis inhibitors are, inter alia, propanil, pyridate, pyridafol, benzothiadiazinones, dinitrophenols, dipyridylenes, ureas, phenols, chloridazon, triazine, triazinone, uracils or biscarbamates.

Examples of herbicides which can be used in combination with the 3-heterocyclyl-substituted benzoyl derivatives of formula I and the compound of formula II according to the present invention are, inter alia:

C9 lipid biosynthesis inhibitors, for example

- anilides, such as anilofos or mefenacet;
- chloroacetanilides, such as dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
- thioureas, such as butylate, cycloate, di-allate, dimepiperate, EPTC, esprocarb, molinate, pebulate, prosulfocarb, thiobencarb (benthiocarb), tri-allate or vernolate; or
- benfuresate or perfluidone;

C12 photosynthesis inhibitors, for example

- propanil, pyridate or pyridafol;
- benzothiadiazinones, such as bentazone;
- dinitrophenols, for example bromofenoxim, dinoseb, dinoseb-acetate, dinoterb or DNOC;
- dipyridylenes, such as cyperquat-chloride, difenzoquat-methylsulfate, diquat or paraquat-dichloride;
- ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols, such as bromoxynil or ioxynil;
- chloridazon;
- triazines, such as ametryn, atrazine, cyanazine, desmetryn, dimethamethryn, hexazinone, prometon, prometryn, propazine, simazine, simetryn, terbumeton, terbutryn, terbutylazine or trietazine;
- triazinones, such as metamitron or metribuzin;
- uracils, such as bromacil, lenacil or terbacil; or
- biscarbamates, such as desmedipham or phenmedipham;

or their environmentally compatible salts.

The 3-heterocyclyl-substituted benzoyl derivatives of the formula I are disclosed in WO 96/26206, WO 97/41116, WO 97/41117, WO 97/41118 and WO 98/31681.

The herbicidally active compounds from amongst groups B and C9 or C12 are described, for example, in

- "Herbizide [Herbicides]", Hock, Fedtke, Schmidt, 1st, edition, Thieme 1995 (s. "molinat" p. 32, "butachlor" p. 32, "pretilachlor" p. 32, "mefenacet" p. 32, "dimepiperate" p. 32, "benfuresate" p. 233, "dimethyametryn" p. 118, "esprocarb" p. 229, "propanil" p. 32, "bentazon" p. 30

- "Agricultural Chemicals", Book II Herbicides, 1993 (s. "thiobencarb" p. 85, "anilofos" p. 241, "dimethenamid" p. 48, "prosulfocarb" p. 84, "metazachlor" p. 64, "bromofenoxim" p. 228, "imazamethabenz-methyl" p. 153

- "Agricultural Chemicals", Book II Herbicides, 13th Edition (s. "imazapic" p. 160, "butenachlor" p. 54

- "Short Review of Herbicides PGRs 1991, Hodogaya Chemicals (s. "thenyl-chlorid (NSK-850)" p. 52, "butylate" p. 106, "cycloate" p. 108, "desmedipham" p. 104, "di-allate" p. 106, "EPTC" p. 108, "pebulate" p. 106, "phenmedipham" p. 104, "triallate" p. 108, "vernolate" p. 108, "acetochlor" p. 48, "alachlor" p. 46, "diethathyl-ethyl" p.48, "dimethachlor" p. 50, "metolachlor" p. 46, "propachlor" p. 44, "pyrnachlor" p. 44, "terbuchlor" p. 48, "xylachlor" p. 52, "dinoseb" p. 128, "dinoseb-acetate" p. 128, "dinoterb" p. 128, "DNOC" p. 126, "difenoxuron" p. 76, "cyperquat-chloride" p. 158, "difenzoquat-methylsulfate" p. 160, "diquat" p. 158, "paraquat-dichloride" p. 158, "chlorbromuron" p. 72, "chlorotoluron" p. 74, "dimefuron" p. 88, "diuron" p. 70, "ethidimuron" p. 86, "fenuron" p. 64, "fluometuron" p. 68, "isoproturon" p. 80, "isouron" p. 88, "linuron" p. 72, "methabenzthiazuron" p. 82, "metoxuron" p. 72, "monolinuron" p. 66, "neburon" p. 72, "siduron" p. 68, "tebuthiuron" p. 86, "imazamethapyr" p. 172, "imazapyr" p. 170, "imazaquin" p. 170, "imazethapyr" p. 172, "methazole" p. 162, "bromoxynil" p. 148, "ioxynil" p. 148, "chloridazon" p. 174, "pyridate" p. 176,

- "ametryn" p. 198, "atrazine" p. 188, "cyanazine" p. 192

- "desmetryne" p. 200,

- "hexazinone" p. 208, "prometone" p. 196, "prometryn" p. 196, "propazine" p. 188, "simazine" p. 188, "simetryn" p. 196, "terbumeton" p. 204, "terbutryn" p. 198, "terbutylazine" p. 190, "trietazine" p. 188, "metamitron" p. 206, "metribuzin" p. 202, "bromacil" p. 180, "lenacil" p. 180, "terbacil" p. 180 "perfluidone" p. 260, "terbuchlor" p . 48);

- "The Pesticide Maunal, $12^{th}$ edition, 2000 (s. "pretilachlor" p. 755)

Other compounds are known from "Brighton Crop Protection Conference - Weeds - 1993" (S. "metobenzuron" p. 67). The assignment of the active ingredients to the respective mechanisms of action is based on current knowledge. If several mechanisms of action apply to one active ingredient, this substance was only assigned to one mode of action.

The 3-heterocyclyl-substituted benzoyl derivatives of the formula I can exist, or be used, in the form of the pure enantiomers and also as racemates or diastereomer mixtures.

The 3-heterocyclyl-substituted benzoyl derivatives of the formula I and/or the herbicidally active compounds from amoungs group B and/or the herbicidally active compounds from amoungs groups C9 or C12 may also exist in the form of their environmentally compatible salts. Suitable salts are, in general, the salts of those cations, or the acid addition salts of those acids, whose cations, or anions, respectively, do not adversely affect the herbicidal action of the active ingredients.

Suitable cations are, in particular, ions of the alkali metals, preferably lithium, sodium and potassium, of the alkaline earth metals, preferably calcium and magnesium, and of the transition metal, preferably manganese, copper, zinc and iron, and also ammonium, it being possible in this case, if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, isopropylammonium, dimethylammonium, diisopropylammonium, tetramethylammonium, tetrabutylammonium, 2-(2-hydroxyeth-1-oxy)eth-1-yl ammonium, di(2-hydroxyeth-1-yl)ammonium, trimethylbenzylammonium, furthermore phosphonium ions, sulfonium ions, preferably tri($C_1$-$C_4$-alkyl)-sulfonium and sulfoxonium ions, preferably, tri($C_1$-$C_4$-alkyl) - sulfoxonium.

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of $C_1$-$C_4$-alkanoic acids, preferably formate, acetate, propionate and butyrate.

Preferred with regard to the synergistic herbicidal action of the mixtures according to the invention are those 3-hetero-cyclyl-substituted benzoyl derivatives of the formula I in which the variables have the following meanings, either alone or in combination:

$R^1$ halogen such as chlorine or bromine, $C_1$-$C_6$-alkyl such as methyl or ethyl or $C_1$-$C_5$-alkylsulfonyl such as methylsulfonyl or ethylsulfonyl; especially preferably chlorine, methyl or methylsulfonyl;

$R^2$ a heterocyclic radical selected from the group: isoxazol-3yl, isoxazol-5-yl and 4,5-dihydroisoxazol-3-yl, it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
especially preferably isoxazol-5-yl, 3-methyl-isoxazol-5-yl, 4,5-dihydroisoxazol-3-yl, 5-methyl-4,5-dihydroisoxazol-yl, 5-ethyl-4,5-dihydroisoxazol-3-yl or 4,5-dimethyl-4,5dihydroisoxazol-3-yl;

$R^3$ halogen such as chlorine or bromine or $C_1$-$C_6$-alkylaulfonyl such as methylsulfonyl or ethylsulfonyl; especially preferably chlorine, methylsulfonyl or ethylsulfonyl;

$R^4$ hydrogen or methyl;
especially preferably hydrogen;

$R^5$ is $C_1$-$C_6$-alkyl, such as methyl, ethyl, propyl, 1-methylethyl, butyl, 1-methylpropyl or 2-methylpropyl; especially preferably methyl, ethyl or 1-methylethyl;

$R^6$ hydrogen or $C_1$-$C_6$-alkyl, such as methyl or ethyl; especially preferably hydrogen or methyl.

Very particularly preferred are those 3-heterocyclyl-substituted benzoyl derivatives of the formula Ia, in particular the compounds Ia.1 to Ia.47, which are mentioned in Table 1 which follows:

Table 1

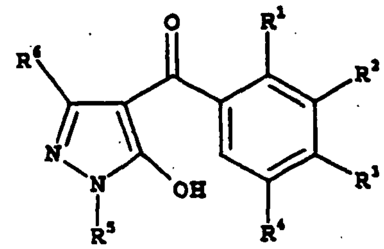

I

| No. | $R^1$ | $R^2$ | $R^3$ | $R^4$ | $R^3$ | $R^6$ |
|---|---|---|---|---|---|---|
| Ia.1 | Cl. | 4,5-dihydroisoxazol-3-yl | $SO_2CH_3$ | H | $CH_3$ | $CH_3$ |
| Ia.2 | Cl | 4,5-dihydroisoxazol-3-yl | Cl | H | $CH_3$ | $CH_3$ |
| Ia.3 | Cl | 4,5-dihydroisoxazol-3-yl | $SO_2CH_3$ | H | $CH_3$ | H |
| Ia.4 | Cl | 4,5-dihydro-5-methylisoxazol-3-yl | $SO_2CH_3$ | H | $CH_3$ | H |
| Ia.5 | Cl | 4,5-dihydro-5,5-dimethylisoxazol-3-yl | $SO_2CH_3$ | H | $CH_3$ | H |
| Ia.6 | Cl | 4,5-dihydro-5-ethylisoxazol-3-yl | $SO_2CH_3$ | H | $CH_3$ | H |
| Ia.7 | Cl | 4,5-dihydro-5,5-diethylisoxazol-3-yl | $SO_2CH_3$ | H | $CH_3$ | H |
| Ia.8 | Cl | 4,5-dihydro-5-chloromethylisoxazol-3-yl | $SO_2CH_3$ | H | $CH_3$ | H |
| Ia.9 | Cl | 4,5-dihydro-5-ethoxyisoxazol-3-yl | $SO_2CH_3$ | H | $CH_3$ | H |
| Ia.10 | Cl | 4,5-dihydro-5-methoxyisoxazol-3-yl | $SO_2CH_3$ | H | $CH_3$ | H |
| Ia.11 | Cl | 4,5-dihydro-4,5-dimethylisoxazol-3-yl | $SO_2CH_3$ | H | $CH_3$ | H |
| Ia.12 | Cl | 4,5-dihydro-5-thioethylisoxazol-3-yl | $SO_2CH_3$ | H | $CH_3$ | H |
| Ia.13 | Cl | 4,5-dihydro-5-trifluoromethylisoxazol-3-yl | $SO_2CH_3$ | H | $CH_3$ | H |
| Ia.14 | Cl | 4,5-dihydroisoxazol-3-yl | $SO_2CH_3$ | H | $C_2H_5$ | H |
| Ia.15 | Cl | 4,5-dihydroisonzol-3-yl | Cl | H | $C_2H_5$ | H |
| Ia.16 | Cl | 4,5-dihydro-5-methylisoxazol-3-yl | $SO_2CH_3$ | H | $C_2H_5$ | H |
| Ia.17 | Cl | 4,5-dihydro-5,5-dimethylisoxazol-3-yl | $SO_2CH_3$ | H | $C_2H_5$ | H |
| Ia.18 | Cl | 4,5-dihydro-5-ethylisoxazol-3-yl | $SO_2CH_3$ | H | $C_2H_5$ | H |
| Ia.19 | Cl | 4,5-dihydro-5,5-diethylisoxazol-3-yl | $SO_2CH_3$ | H | $C_2H_5$ | H. |
| Ia.20 | Cl | 4,5-dihydro-5-chloromethylisoxazol-3-yl | $SO_2CH_3$ | H | $C_2H_5$ | H |
| Ia.21 | Cl | 4,5-dihydroisoxazol-3-yl | $SOCH_3$ | H | $C_2H_5$ | H |
| Ia.22 | Cl | 4,5-dihydro-5-ethoxyisoxazol-3-yl | $SO_2CH_3$ | H | $C_2H_5$ | H |
| Ia.23 | Cl | 4,5-dihydro-4,5-dimethylisoxazol-3-yl | $SO_2CH_3$ | H | $C_2H_5$ | H |

(continued)

| No. | $R^1$ | $R^2$ | $R^3$ | $R^4$ | $R^3$ | $R^6$ |
|---|---|---|---|---|---|---|
| Ia.24 | Cl | 4,5-dihydro-5-thioethylisoxazol-3-yl | $SO_2CH_3$ | H | $C_2H_5$ | H |
| Ia.25 | Cl | 4,5-dihydro-5-trifluoromethylisoxazol-3-yl | $SO_2CH_3$ | H | $C_2H_5$ | H |
| Ia.26 | Cl | 4,5-dihydroisoxazol-3-yl | $SO_2CH_3$ | H | i-$C_4H_9$ | H |
| Ia.27 | $CH_3$ | 4,5-dihydroisoxazol-3-yl | $SO_2CH_3$ | H | $CH_3$ | $CH_3$ |
| Ia.28 | $CH_3$ | 4,5-dihydroisoxazol-3-yl | Cl | H | $CH_3$ | $CH_3$ |
| Ia.29 | $CH_3$ | 4,5-dihydroisoxazol-3-yl | $SO_2CH_3$ | H | $CH_3$ | H |
| Ia.30 | $CH_3$ | 4,5-dihydro-5-methylisoxazol-3-yl | $SO_2CH_3$ | H | $CH_3$ | H |
| Ia.31 | $CH_3$ | 4,5-dihydro-5,5-dimethylisoxazol-3-yl | $SO_2CH_3$ | H | $CH_3$ | H |
| Ia.32 | $CH_3$ | 4,5-dihydro-5-ethylisoxazol-3-yl | $SO_2CH_3$ | H | $CH_3$ | H |
| Ia.33 | $CH_3$ | 4,5-dihydro-5,5-diethylisoxazol-3-yl | $SO_2CH_3$ | H | $CH_3$ | H |
| Ia.34 | $CH_3$ | 4,5-dihydroisoxazol-3-yl | $SO_2CH_3$ | H | $CH_3$ | H |
| Ia.35 | $CH_3$ | 4,5-dihydro-4,5-dimethylisoxazol-3-yl | $SO_2CH_3$ | H | $CH_3$ | H |
| Ia.36 | $CH_3$ | 4,5-dihydroisoxazol-3-yl | $SO_2CH_3$ | H | $C_2H_5$ | H |
| Ia.37 | $CH_3$ | 4,5-dihydroisoxazol-3-yl | Cl | H | $C_2H_5$ | H |
| Ia.38 | $CH_3$ | 4,5-dihydro-5-methylisoxazol-3-yl | $SO_2CH_3$ | H | $C_2H_5$ | H |
| Ia.39 | $CH_3$ | 4,5-dihydro-5,5-dimethylisoxazol-3-yl | $SO_2CH_3$ | H | $C_2H_5$ | H |
| Ia.40 | $CH_3$ | 4,5-dihydro-5-ethylisoxazol-3-yl | $SO_2CH_3$ | H | $C_2H_5$ | H |
| Ia.41 | $CH_3$ | 4,5-dihydro-5,5-diethylisoxazol-3-yl | $SO_2CH_3$ | H | $C_2H_5$ | H |
| Ia.42 | $CH_3$ | 4,5-dihydro-4,5-dimethylisoxazol-3-yl | $SO_2CH_3$ | H | $C_2H_5$ | H |
| Ia.43 | $CH_3$ | 4,5-dihydroisoxazol-3-yl | $SO_2CH_3$ | H | i-$C_4H_9$ | H |
| Ia.44 | Cl | 3-methylisoxazol-5-yl | $SO_2CH_3$ | H | $CH_3$ | H |
| Ia.45 | Cl | 3-methylisoxazol-5-yl | $SO_2CH_3$ | H | $C_2H_5$ | H |
| Ia.46 | $CH_3$ | 3-methylisoxazol-5-yl | $SO_2CH_3$ | H | $CH_3$ | H |
| Ia.47 | $CH_3$ | 3-methylisoxazol-5-yl | $SO_2CH_3$ | H | $C_2H_5$ | H |

- Also very particularly preferred are the compounds Ib, in particular the compounds 1b.1 to 1b.47, which differ from the compounds Ia.1 to Ia.47 only by the fact that they are present as the sodium salt:

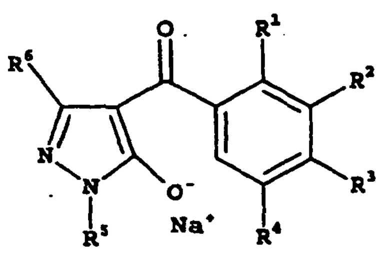

Ib

- Also very particularly preferred are the compounds Ic, in particular the compounds Ic.1 to Ic.47, which differ from the compounds Ia.1 to Ia.47 only by the fact that they are present as the lithium salt:

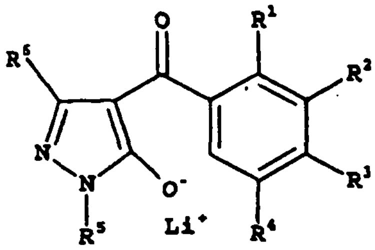

Ic

- Also very particularly preferred are the compounds Id, in particular the compounds Id.1 to Id.47, which differ from the compounds Ia.1 to Ia.47 only by the fact that they are present as the potassium salt:

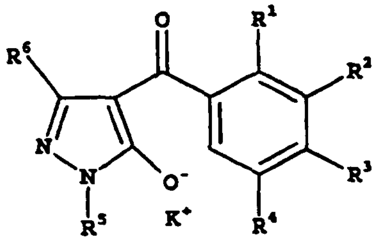

Id

- Also very particularly preferred are the compounds Ie, in particular the compounds Ie.1 to Ie.47, which differ from the compounds Ia.1 to Ia.47 only by the fact that they are present as the ammonium salt:

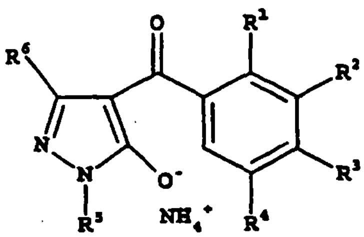

Ie

- Very particularly preferred are, especially, the compounds Ia, especially the compounds Ia.1 to Ia.47.
- Very particularly preferred are, moreover, the 3-heterocyclyl-substituted benzoyl derivatives of the formula I, where

  $R^4$ is hydrogen.

- Very particularly preferred are, moreover, the 3-heterocyclyl substituted benzoyl derivatives of the formula I where

  $R^2$ is a heterocyclic radical selected from the group: isoxazol-3-yl, isoxazol-4-yl and isoxazol-5-yl, it being possible for the three radicals mentioned to be unsubstituted or mono- or polysubstituted by halogen, $C_1C_4$-alkyl, $C_1$-$C_4$-alkoxy, $C_1$-$C_4$-haloalkyl, $C_1$-$C_4$-haloalkoxy or $C_1$-$C_4$-alkylthio.

Very particularly preferred are, especially, the 3-heterocyclyl-substituted benzoyl derivatives of the formula I, where

$R^2$ is isoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen.

Very particularly preferred are also, especially, the 3-heterocyclyl-substituted benzoyl derivatives of the formula I where

$R^2$ is isoxazol-5-yl, which can be unsubstituted or monoor polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen.

Most particularly preferred is 4-[2-chloro-3-(3-methyl-isoxazol-5-yl)-4-methylsulfonyl-benzoyl]-1-methyl-5-hydroxy-1H-pyrazole.
Most particularly preferred is also 4-[2-methyl-3-(3-methyl-isoxazol-5-yl)-4-methylsulfonyl-benzoyl]-1-methyl-5-hydroxy-1H-pyrazole.

- Very particularly preferred are, moreover, the 3-heterocyclyl-substituted benzoyl derivatives of the formula I where

$R^2$ is a heterocyclic radical selected from the group:
4,5-dihydroisoxazol-3-yl, 4,5-dihydroisoxazol-4-yl and 4,5-dihydroisoxazol-5-yl, it being possible for the three radicals mentioned to be unsubstituted or monoor polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

Very particularly preferred are, especially, the 3-heterocyclyl-substituted benzoyl derivatives of the formula I where

$R^2$ is 4,5-dihydroisoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen.

Most particularly preferred are the 3-heterocyclyl-substituted benzoyl derivatives of the formula I where

$R^1$ is halogen or $C_1$-$C_6$-alkyl; and

$R^2$ is 4,5-dihydroisoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^3$ is $C_1$-$C_6$-alkylsulfonyl;

$R^4$ is hydrogen.

Most especially preferred is 4-[2-chloro-3-(4,5-dihydro-isoxazol-3-yl)-4-methylsulfonylbenzoyl]-1-methyl-5-hydroxy-1H-pyrazole.
Most particularly preferred is also 4-[2-methyl-3-(4,5-dihydroisoxazol-3-yl)-4-methylsulfonyl-benzoyl]-1-methyl-5-hydroxy-1H-pyrazole.

Preferred with regard to the synergistic herbicidal action of the mixtures according to the invention are those mixtures comprising as component B) imazapyr and imazethapyr, or imapzapyr and imazapic; especially preferred are those mixtures comprising as component B) imazapyr and imazethapyr.

- For particular preferred embodiments, the respective preferences described above apply analogously.
In particular the synergistic herbicidal mixture comprises as component A 4-[2-methyl-3-(4,5-dihydroisoxazol-3-yl)-4-methylsulfonyl-benzoyl]-1-methyl-5-hydroxy-1H-pyrazole and two herbicides selected from the group including imazapyr, imazaquin, imazamethabenz-methyl, imazamox, imazapic and imazethapyr (component B).
Especially the synergistic herbicidal mixture comprises as component A 4-[2-methyl-3-(4,5-dihydroisoxazol-3-yl)-4-methylsulfonyl-benzoyl]-1-methyl-5-hydroxy-1H-pyrazole and as component B) imazapyr and imazethapyr.

In a further embodiment the synergistic herbicidal mixture especially comprises as component A 4-[2-methyl-3-(4,5-dihydroisoxazol-3-yl)-4-methylsulfonyl-benzoyl]-1-methyl-5-hydroxy-1H-pyrazole and as component B) imazapyr and imazapic.
In particular, compounds from amongst the classes of active ingredients mentioned below are preferred, or the following compounds are very particularly preferred:
C9 lipid biosynthesis inhibitors:

- chloroacetanilides, in particular dimethenamid, S-dimethenamid, acetochlor, metolachlor or S-metolachlor,
- thioureas, in particular benthiocarb;

C12 photosynthesis inhibitors:

- pyridate or pyridafol, in particular pyridate;
- benzothiadiazinones, in particular bentazone;
- dipyridylenes, in particular paraquat-dichloride;
- ureas, in particular diuron or isoproturon, preferably diuron;
- phenols, in particular bromoxynil;
- chloridazone;
- triazines, in particular atrazine or terbutylazine; or
- triazinones, in particular metribuzin;

In particular, compounds from amongst the classes of active ingredients mentioned below are preferred, or the following compounds are very particularly preferred.
C9 lipid biosynthesis inhibitors:

- chloroacetanilides, in particular dimethenamid, S-dimethenamid, acetochlor, metolachlor or S-metolachlor;

C12 photosynthesis inhibitors:

- pyridate;
- benzothiadiazinones, in particular bentazone;
- dipyridylenes, in particular paraquat-dichloride;
- ureas, in particular diuron or isoproturon, preferably diuron;
- phenols, in particular bromoxynil;
- chloridazon;
- triazines, in particular atrazine or terbutylazine; or
- triazinones, in particular metribuzin;

For particular preferred embodiments, the respective preferences described above apply analogously.
Especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole; as component B two herbicides selected from the group including imazapyr, imazaquin, imazamethabenz-methyl, imazamox, imazapic an imazetapyr, in particular imazapyr and imazetapyr or imazetapyr and imazapic; and as component C a herbicidal compound from the group C9, in particular a chloroacetanilide, especially acetochlor.
In particular preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazetapyr; and as component C a chloroacetanilide, especially acetochlor.
In particular-preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazapic; and as component C a chloroacetanilide, especially acetochlor.
Also especially preferred are synergistic herbicidal mixtures which comprise as component A 4-[2-methyl-3-(4,5-dihydro-isoxazol-3-yl)-4-methylsulfonyl-benzoyl]-1-methyl-5-hydroxy-1H-pyrazole; as component B two herbicides selected from the group including imazapyr, imazaquin, imazamethabenz-methyl, imazamox, imazapic and imazetapyr, in particular imazapyr and imazetapyr or imazapyr and imazapic; and as component C a herbicidal compound from the group C12, in particular a triazine, especially atrazine, or a benzothiadiazinone, especially bentazone.
In particular preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazetapyr; and as component C a triazine, especially atrazine.

Also in particular preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazetapyr; and as component C a benzothiadiazinone, especially bentazone.

Also in particular preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazapic; and as component C a triazine, especially atrazine.

Also in particular preferred are synergistic herbicidal mixtures which comprise as component A 4-[2-methyl-3-(4,5-dihydroisoxa-zol-3-yl)-4-methylsulfonyl-benzoyl]-1-methyl-5-hydroxy-1H-pyrazole; as component B imazapyr and imazapic; and as component C a benzothiadiazinone, especially bentazone.

The present invention also extends to herbicidal compositions which comprise a herbicidally active amount of a synergistic herbicidal mixture (comprising components A), B) and
C) as described above), at least one liquid and/or solid carrier and, if desired, at least one surfactant.

The herbicidal compositions and synergistic herbicidal mixtures according to the invention can effect very good control of broad-leaved weeds and grass weeds in crops such as maize, cereals, rice and soya without damaging the crop plants, an effect observed especially even at low rates of application.

Taking into consideration the variety of application method in question, the herbicidal compositions and synergistic herbicidal mixtures according to the invention can additionally be employed in a further number of crop plants for eliminating undesirable plants. Examples of suitable crops are the following:
Allium cepa, Ananas comosus, Arachis hypogaea, Asparagus offici-nalis, Beta vulgaris ssp. altissima, Beta vulgaris ssp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Pragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylvestre, Ricinus communis, saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Moreover, the herbicidal compositions and synergistic herbicidal mixtures according to the invention can also be used in crops which tolerate the action of herbicides due to breeding, including genetic engineering methods.

The mixtures according to the invention, or the herbicidal compositions comprising them, can be employed, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, spreading or pouring.

The use forms depend on the intended purposes; in any case, they should guarantee the finest possible distribution of the active ingredients according to the invention.

Suitable inert auxiliaries are mineral oil fractions of medium to high boiling point such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, such as N-methylpyrrolidone and water.

Aqueous use forms can be prepared from emulsion concentrates, suspensions, pastes, wettable powders or water-dispersible granules by adding water. To prepare emulsions, pastes or oil dispersions, the substances, as such or dissolved in an oil or solvent, can be homogenized in water by means of wetting agent, tackifier, dispersant or emulsifier. However, it is also possible to prepare concentrates composed of active substance, wetting agent, tackifier, dispersant or emulsifier and, if appropriate, solvent or oil, and these concentrates are suitable for dilution with water.

Suitable surfactants are the alkali metal, alkaline earth metal and ammonium salts of aromatic sulfonic acids, e.g. ligno-, phenol-, naphthalene- and dibutylnaphthalenesulfonic acid, and of fatty acids, of alkyl- and alkylaryl sulfonates, of alkyl sulfates, lauryl ether sulfates and fatty alcohol sulfates, and salts of sulfated hexa-, hepta- and octadecanols, and of fatty alcohol glycol ether, condensates of sulfonated naphthalene and its derivatives with formaldehyde, condensates of naphthalene, or of the naphthalenesulfonic acids, with phenol and formaldehyde, polyoxyethylene octylphenyl ether, ethoxylated isooctyl-, octyl- or nonylphenol, alkylphenyl and tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

Powders, materials for spreading and dusts can be prepared by mixing or concomitantly grinding the synergistic herbicidal mixture or the individual active ingredients with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic material, fertilizers such as ammonium sulfate, ammonium phosphate, ammonium nitrate, ureas and products of vegetable origin such as cereal meal, tree bark meal, wood meal and nut-shell meal, cellulose powders or other solid carriers.

The concentrations of the mixtures according to the invention in the ready-to-use products can be varied within wide ranges. In general, the formulations comprise from 0.01 to 95% by weight, preferably 0.5 to 90% by weight, of the mixture according to the invention.

The components A) and B) and C) can be formulated jointly, but also separately, and/or applied to the plants, their environment and/or seeds jointly or separately. It is preferable to apply the active ingredients simultaneously. However, it is also possible to apply them separately.

Also the two herbicides of component B) can be formulated separately, and/or applied to the plants, their environment and/or seeds jointly or separately.

Moreover, it may be advantageous to apply the herbicidal compositions and synergistic herbicidal mixtures according to the invention, jointly or separately, with additional other crop protection agents, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates can also be added.

The mixtures according to the invention and the herbicidal compositions can be applied pre- or post-emergence. If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

In the case of a post-emergence treatment of the plants, the herbicidal compositions according to the invention are preferably applied by foliar application. Application may be effected, for example, by usual spraying techniques with water as the carrier, using amounts of spray mixture of approx. 100 to 1000 1/ha. The compositions may also be applied by the so-called "low-volume" and "ultra-low-volume" methods, or in the form of so-called granules.

As a rule, the synergistic herbicidal mixtures comprise components A), B) and C) in such weight ratios that the synergistic effect takes place.
The ratios of component A) and B) in the mixture preferably range from 1:0.001 to 1:500, preferably from 1:0.01 to 1: 100., particularly preferably from 1:0.1 to 1:50.
The ratios of components A) and C) in the mixture preferably range from 1:0.002 to 1:800, preferably from 1:0.003 to 1:250, especially from 1:0.003 to 1:160, particularly preferably from 1:0.02 to 1:250, especially particularly preferably from 1:0.02 to 1:160.

The rate of application of pure synergistic herbicidal mixture, i.e. without formulation auxiliaries, amounts to 0.2 to 5000 g/ha, especially to 1 to 2000 g/ha, preferably to 2 to 2000 g/ha, in particular to 8 to 1500 g/ha, of active substance (a.s.), depending on the intended aim, the season, the target plants and growth stage.

The rate of application of 3-heterocyclyl-substituted benzoyl derivative of the formula I is 0.1 to 250 g/ha, as a rule 0.5 to 250 g/ha, especially 5 to 250 g/ha, preferably 10 to 150 g/ha, of active substance (a.s.).

The preferred rate of application of component B) is 0.1 to 250 g/ha, as a rule 0.5 to 120 g/ha, especially 1 to 120 g/ha, preferably 10 to 100 g/ha, of active substance (a.s.)

The preferred application rate of the active ingredients of the optional component C) are compiled in Table 2.

Table 2

| Component C | | Class of active ingredient | Active ingredient | Rate of application (g/ha) |
|---|---|---|---|---|
| C9 | lipid biosynthesis inhibitors | | | 60-4000 |
| | | chloroacetanilides | | 60-4000 |
| | | | dimethenamid | 60-2000 |
| | | | S-dimethenamid | 60-2000 |
| | | | acetochlor | 250-4000 |
| | | | metolachlor | 60-4000 |
| | | | S-metolachlor | 60-4000 |

(continued)

| Component C | | Class of active ingredient | Active ingredient | Rate of application (g/ha) |
|---|---|---|---|---|
| | | thioureas | | 100-4000 |
| | | | benthiocarb | 1000-4000 |
| C12 | photosynthesis inhibitors | | | 15-4000 |
| | | | pyridate | 250-1500 |
| | | | pyridafol | 250-1000 |
| | | benzothiadiazinones | | 30-1440 |
| | | | bentazone | 30-1440 |
| | | dipyridylenes | | 100-800 |
| | | | paraquat-dichloride | 100-800 |
| | | ureas | | 250-1600 |
| | | | diuron | 250-1600 |
| | | | isoprotoron | 250-1600 |
| | | phenols | | 100-700 |
| | | | bromoxynil | 100-700 |
| | | chloridazon | | 500-4000 |
| | | triazines | | 15-4000 |
| | | | atrazine | 15-4000 |
| | | | terbutylazine | 250-4000 |
| | | triazinone | | 30-300 |
| | | | metribuzin | 30-300 |

Use examples

The mixtures according to the invention were applied pre- or post-emergence (foliar treatment). The herbicidal compounds of component B and of component C were applied in the formulation in which they are present as commercially available product.

The herbicidally active compounds of components A), B) and C) were applied in succession or jointly, in the latter case in some cases as a tank mix and in some cases as a ready-mix, in the form of emulsions, aqueous solutions or suspensions, the vehicle being water (300 - 400 1/ha). In the case of the field trials, application was effected with the aid of a mobile plot sprayer.

The test period extended over 3 to 8 weeks, and the stands were also observed at later points in time.

Damage by the herbicidal compositions was evaluated with reference to a scale of 0% to 100% in comparison with untreated control plots. 0 means no damage and 100 means complete destruction of the plants.

The following examples will demonstrate the action of the herbicidal compositions which can be used according to the invention, without excluding the possibility of other uses.

In these examples, the value E at which only an additive effect of the individual active ingredients is to be expected was calculated by the method of S. R. Colby (Calculating synergistic and antagonistic responses of herbicide combinations, Weeds 15, 20 pp (1967)).

This was done using the formula

$$E = X + Y - \frac{XY}{100}$$

where

X = Percentage of the herbicidal action of X at an application rate of x;

Y = Percentage of the herbicidal action of Y at an application rate of Y;

E = expected herbicidal action of X + Y at rates of application x + y (in %) ;

or the formula

$$E = X + Y + Z - \frac{(XY + XZ + YZ)}{100} + \frac{XYZ}{10000}$$

where

X = Percentage of the herbicidal action of X at an application rate of x;

Y = Percentage of the herbicidal action of Y at an application rate of y;

Z = Percentage of the herbicidal action of Z at an application rate of Z;

B = expected herbicidal action of X + Y + Z at rates of application x + y + z (in %).

If the value observed exceeds the value B calculated in accordance with Colby's formula, then synergism is present.

The herbicidal mixtures according to the invention exert a greater herbicidal action than would have been expected according to Colby on the basis of the observed effects of the individual components when used alone.

The results of the tests are shown in Tables 3 to 17 below.

In these studies, the following plants were used:

| Scientific name | Common name |
|---|---|
| Abutilon theophrasti | Velvetleaf |
| Amaranthus retroflexus | Pigweed |
| Avena fatua | Wild oat |
| Brachiaria plantaginea | Alexandergrass |
| Commelina benghalensis | Bengal commelina |
| Echinochloa crus-galli | Barnyardgrass |
| Galium aparine | Catchweed |
| Pharbitis purpurea | Common morningglory |
| Polygonum persicaria | Ladysthumb. |

Table 3: Herbicidal action of compound 1a.29 and imazapyr and imazethapyr[1] (post-emergence treatment; greenhouse) (comparative example)

| | Application rate [g/ha ai] | Abutilon theophrasti | Colby Value E |
|---|---|---|---|
| | | Damage [%] | |
| Ia.29 | 0.98 | 30 | - |
| imazapyr + imazethapyr | 0.98 | 20 | - |

(continued)

| | Application rate [g/ha ai] | Abutilon theophrasti | Colby Value E |
|---|---|---|---|
| | | Damage [%] | |
| Ia.29 + imazapyr + imazethapyr | 0.98 + 0.98 | 55 | 44 |

Table 4: Herbicidal action of compound 1a.29 and imazapyr and imazethapyr[1] (post-emergence treatment; greenhouse) (comparative example)

| | Application rate [g/ha ai] | Commelina benghalensis | Colby Value E |
|---|---|---|---|
| | | Damage [%] | |
| Ia.29 | 3.91 | 50 | - |
| imazapyr + imazethapyr | 3.91 | 10 | - |
| Ia.29 + imazapyr + imazethapyr | 3.91 + 3.91 | 70 | 55 |

Table 5: Herbicidal action of compound 1a.29 and imazapic and imazapyr[2] (post-emergence treatment; greenhouse) (comparative example)

| | Application rate [g/ha ai] | Avena fatua | Colby Value E | Amaranthus retroflexus | Colby Value E |
|---|---|---|---|---|---|
| | | Damage [%] | | Damage [%] | |
| Ia.29 | 0.98 | 0 | - | 60 | - |
| imazapic + imazapyr | 0.98 | 10 | - | 20 | - |
| Ia.29 + imazapic + imazapyr | 0.98 + 0.98 | 40 | 10 | 75 | 68 |

Table 6: Herbicidal action of compound 1a.29 and imazapic and imazapyr[2] (post-emergence treatment; greenhouse) (comparative example)

| | Application rate [g/ha ai] | Avena fatua | Colby Value E |
|---|---|---|---|
| | | Damage [%] | |
| Ia.29 | 1.95 | 10 | - |

(continued)

| | Application rate [g/ha ai] | Avena fatua | Colby Value E |
|---|---|---|---|
| | | Damage [%] | |
| imazapic + imazapyr | 1.95 | 25 | - |
| Ia.29 + imazapic + imazapyr | 1.95 + 1.95 | 60 | 33 |

Table 7: Herbicidal action of compound 1a.29, imazapyr and imazethapyr[1], and atrazine (post-emergence treatment; greenhouse)

| | Application rate [g/ha ai] | Amaranthus retroflexus | Colby Value B | Galium aparine | Colby Value E |
|---|---|---|---|---|---|
| | | Damage [%] | | Damage [%] | |
| Ia.29 | 0.98 | 60 | - | 20 | - |
| imazapyr + imazethapyr | 0.98 | 20 | - | 20 | - |
| atrazine | 15.6 | 40 | - | 0 | - |
| Ia.29 + imazapyr + imazethapyr + atrazine | 0.98 + 0.98 + 15.6 | 85 | 81 | 50 | 36 |

Table 8: Herbicidal action of compound 1a.29, imazapyr and imazethapyr[1], and atrazine (post-emergence treatment; greenhouse)

| | Application rate [g/ha ai] | Galium aparine | Colby Value B |
|---|---|---|---|
| | | Damage [%] | |
| Ia.29 | 1.95 | 30 | - |
| imazapyr + imazethapyr | 1.95 | 40 | - |
| atrazine | 31.25 | 20 | - |

(continued)

| | Application rate [g/ha ai] | Galium aparine | Colby Value B |
|---|---|---|---|
| | | Damage [%] | |
| Ia.29 + imazapyr + imazethapyr + atrazine | 1.95 + 1.95 + 31.25 | 70 | 66 |

Table 9: Herbicidal action of compound 1a.29, imazapic and imazapyr[2], and atrazine (post-emergence treatment; greenhouse)

| | Application rate [g/ha ai] | Abutilon theophrasti | Colby Value E |
|---|---|---|---|
| | | Damage [%] | |
| Ia.29 | 7.81 | 85 | - |
| imazapic + imazapyr | 7.81 | 70 | - |
| atrazine | 125 | 30 | - |
| Ia.29 + imazapic + imazapyr + atrazine | 7.81 + 7.81 + 125 | 100 | 97 |

Table 10: Herbicidal action of compound 1a.29, imazapyr and imazethapyr[1], and atrazine (post-emergence treatment; greenhouse)

| | Application rate [g/ha ai] | Brachiaria plantaginea | Colby Value E | Echinochloa crus-galli | Colby Value E |
|---|---|---|---|---|---|
| | | Damage [%] | | Damage [%] | |
| Ia.29 + imazapyr + imazethapyr | 7.81 + 7.81 | 85 | - | 80 | - |
| Atrazine | 125 | 25 | - | 30 | |
| Ia.29 + imazapyr + imazethapyr + atrazine | 7.81 + 7.81 + 125 | 100 | 89 | 100 | 86 |

Table 11: Herbicidal action of compound 1a.29, imazapyr and imazethapyr[1], and atrazine (post-emergence treatment; greenhouse)

| | Application rate [g/ha ai] | Galium aparine | Colby Value B | Polygonum persicaria | Colby Value E |
|---|---|---|---|---|---|
| | | Damage [%] | | Damage [%] | |
| Ia.29 + imazapyr + imazethapyr | 7.81 + 7.81 | 70 | - | 75 | - |
| atrazine | 125 | 60 | - | 60 | |
| Ia.29 + imazapyr + imazethapyr + atrazine | 7.81 + 7.81 + 125 | 98 | 88 | 100 | 90 |

Table 12: Herbicidal action of compound 1a.29, imazapyr and imazethapyr[1], and atrazine (post-emergence treatment; greenhouse)

| | Application rate [g/ha ai] | Echinochloa crus-galli | Colby Value E | Pharbitis purpurea | Colby Value E |
|---|---|---|---|---|---|
| | | Damage [%] | | Damage [%] | |
| Ia.29 + imazapyr + imazethapyr | 3.91 + 3.91 | 85 | - | 50 | - |
| atrazine | 62.5 | 20 | - | 80 | |
| Ia.29 + imazapyr + imazethapyr + atrazine | 3.91 + 3.91 + 62.5 | 95 | 88 | 100 | 90 |

Table 13: Herbicidal action of compound 1a.29, imazapyr and imazethapyr[1], and atrazine (post-emergence treatment; greenhouse)

| | Application rate [g/ha ai] | Polygonum persicaria | Colby Value E |
|---|---|---|---|
| | | Damage [%] | |
| Ia.29 + imazapyr + imazethapyr | 3.91 + 3.91 | 70 | - |
| atrazine | 62.5 | 40 | |
| Ia.29 + imazapyr + imazethapyr + atrazine | 3.91 + 3.91 + 62.5 | 100 | 82 |

Table 14: Herbicidal action of compound 1a.29, imazapic and imazapyr[2], and atrazine (post-emergence treatment; greenhouse)

| | Application rate [g/ha ai] | Echinochloa crus-galli | Colby Value E | Abutilon theophrasti | Colby Value E |
|---|---|---|---|---|---|
| | | Damage [%] | | Damage [%] | |
| Ia.29 + imazapic + imazapyr | 7.81 + 7.81 | 80 | - | 85 | - |
| atrazine | 125 | 30 | - | 30 | |
| Ia.29 + imazapic + imazapyr + atrazine | 7.81 + 7.81 + 125 | 100 | 86 | 100 | 90 |

Table 15: Herbicidal action of compound 1a.29, imazapic and imazapyr[2], and atrazine (post-emergence treatment; greenhouse)

| | Application rate [g/ha ai] | Galium aparine | Colby Value B |
|---|---|---|---|
| | | Damage [%] | |
| Ia.29 + imazapic + imazapyr | 7.81 + 7.81 | 80 | - |
| atrazine | 125 | 60 | |

(continued)

| | Application rate [g/ha ai] | Galium aparine | Colby Value B |
|---|---|---|---|
| | | Damage [%] | |
| Ia.29 + imazapic + imazapyr + atrazine | 7.81 + 7.81 + 125 | 98 | 92 |

Table 16: Herbicidal action of compound 1a.29, imazapic and imazapyr[2], and atrazine (post-emergence treatment; greenhouse)

| | Application rate [g/ha ai] | Brachiaria plantaginea | Colby Value E | Echinochloa crus-galli | Colby Value E |
|---|---|---|---|---|---|
| | | Damage [%] | | Damage [%] | |
| Ia.29 + imazapic + imazapyr | 3.91 + 3.91 | 85 | - | 80 | - |
| atrazine | 62.5 | 20 | - | 20 | |
| Ia.29 + imazapic + imazapyr + atrazine | 3.91 + 3.91 + 62.5 | 100 | 88 | 98 | 84 |

Table 17: Herbicidal action of compound 1a.29, imazapic and imazapyr[2], and atrazine (post-emergence treatment; greenhouse)

| | Application rate [g/ha ai] | Polygonum persicaria | Colby Value B |
|---|---|---|---|
| | | Damage [%] | |
| Ia.29 + imazapic + imazapyr | 3.91 + 3.91 | 70 | - |
| atrazine | 62.5 | 40 | |

(continued)

| | Application rate [g/ha ai] | Polygonum persicaria | Colby Value B |
|---|---|---|---|
| | | Damage [%] | |
| Ia.29 + imazapic + imazapyr + atrazine | 3.91 + 3.91 + 62.5 | 100 | 82 |

[1] mazapyr : imazethapyr = 1 : 3
[2] imazapic : imazapyr = 3 : 1

## Claims

**1.** A synergistic herbicidal mixture comprising

A) at least one 3-heterocyclyl-substituted benzoyl derivative of the formula I

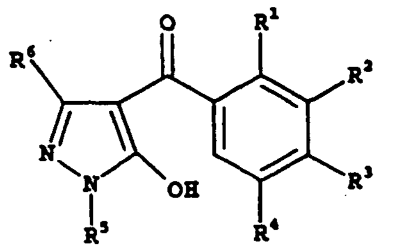

I

in which the variables have the following meanings:

$R^1$, $R^3$ are halogen, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylthio, $C_1$-$C_6$-alkylsulfinyl or $C_1$-$C_6$-alkylsulfonyl;
$R^2$ is a heterocyclic radical selected from the group: isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, it being possible for the six radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
$R^4$ is hydrogen, halogen or $C_1$-$C_6$-alkyl;
R5 is $C_1$-$C_6$-alkyl;
R6 is hydrogen or $C_1$-$C_6$-alkyl;

or one of its environmentally compatible salts;
and
B) two herbicides selected from the group including imazapyr, imazaquin, imazamethabenz-methyl, imazamox, imazapic and imazethapyr;
or one of its environmentally compatible salts;
and
C) at least one herbicidal compound from the groups C9 or C12 :

C9 lipid biosynthesis inhibitors:
anilides, chloroacetanilides, thioureas, benfuresate or perfluidone;
C12 photosynthesis inhibitors:
propanil, pyridate, pyridafol, benzothiadiazinones, dinitrophenols, dipyridylenes, ureas, phenols, chloridazon, triazines, triazinones, uracils or biscarbamates;

or their environmentally compatible salts.

in a synergistically effective amount.

**2.** A synergistic herbicidal mixture as claimed in claims 1, comprising, as component A), a 3-heterocyclyl-substituted benzoyl derivative of the formula I, where $R^4$ is hydrogen.

**3.** A synergistic herbicidal mixture as claimed in any of claims 1 to 2, comprising, as component A), a 3-heterocyclyl-substituted benzoyl derivative of the formula I, where

$R^1$ is halogen, $C_1$-$C_6$-alkyl or $C_1$-$C_6$-alkylsulfonyl;
$R^3$ is halogen or $C_1$-$C_6$-alkylsulfonyl;

**4.** A synergistic herbicidal mixture as claimed in any of claims 1 to 3, comprising, as component A), a 3-heterocyclyl-substituted benzoyl derivative of the formula I, where

$R^2$ is a heterocyclic radical selected from the group: isoxazol-3-yl, isoxazol-5-yl and 4,5-dihydroisoxazol-3-yl, it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**5.** A synergistic herbicidal mixture as claimed in any of claims 1 to 4, comprising, as component A), a 3-heterocyclyl-substituted benzoyl derivative of the formula I, where

$R^2$ is isoxazol-5-yl, 3-methyl-isoxazol-5-yl, 4,5-dihydroisoxazol-3-yl, 5-methyl-4,5-dihydroisoxazol-3-yl, 5-ethyl-4,5-dihydroisoxazol-3-yl or 4,5-dimethyl-4,5-dihydroisoxazol-3-yl.

**6.** A synergistic herbicidal mixture as claimed in any of claims 1 to 5, comprising, as component A), 4-[2-chloro-3-(4,5-dihydroisoxazol-3-yl)-4-methylsulfonyl-benzoyl]-1-methyl-5-hydroxy-1H-pyrazole.

**7.** A synergistic herbicidal mixture as claimed in any of claims 1 to 5, comprising, as component A) 4-[2-methyl-3-(4,5-dihydroisoxazol-3-yl)-4-methylsulfonyl-benzoyl]-1-methyl-5-hydroxy-1H-pyrazole.

**8.** A synergistic herbicidal mixture as claimed in any of claims 1 to 7, comprising as component B) imazapyr and imazethapyr.

**9.** A synergistic herbicidal mixture as claimed in any of claims 1 to 7, comprising as component B) imazapic and imazapyr.

**10.** A synergistic herbicidal mixture as claimed in any of claims 1 to 9, comprising, as component C), at least one herbicidal compound from the groups C9 or C12:
C9 lipid biosynthesis inhibitors:

- anilides:
anilofos or mefenacet;
- chloroacetanilides:
dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
- thioureas:
- butylate, cycloate, di-allate, dimepiperate, EPTC, esprocarb, molinate, pebulate, prosulfocarb, thiobencarb (benthiocarb), tri-allate or vernolate; or
- benfuresate or perfluidone;

C12 photosynthesis inhibitors:

- propanil, pyridate or pyridafol;
- benzothiadiazinones: bentazone;
- dinitrophenols:

bromofenoxim, dinoseb, dinoseb-acetate, dinoterb or DNOC;
- dipyridylenes:
cyperquat-chloride, difenzoquat-methylsulfate, diquat or paraquat-dichloride;
- ureas:
chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols:
bromoxynil or ioxynil;
- chloridazon;
- triazines:
ametryn, atrazine, cyanazine, desmetryn, dimethamethryn, hexazinone, prometon, prometryn, propazine, simazine, simetryn, terbumeton, terbutryn, terbutylazine or trietazine;
- triazinones:
metamitron or metribuzine;
- uracils:
bromacil, lenacil or terbacil; or
- biscarbamates:
desmedipham or phenmedipham;

or their environmentally compatible salts.

**11.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole; as component B) two herbicides selected from the group including imazapyr, imazaquin, imazamethabenz-methyl, imazamox, imazapic and imazethapyr; and as component C) a herbicidal compound from the group C9.

**12.** A synergistic herbicidal mixture as claimed in claim 10. comprising, as component A) 4-[2-methyl-3-(4,5-dihydroisoxa-zol-3-yl)-4-methylsulfonyl-benzoyl]-1-methyl-5-hydroxy-1H-pyrazole, as component B) imazapyr and imazethapyr or imazapic and imazapyr, and as component C) a chloroacetanilide.

**13.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapyr and imazethapyr as component C) acetochlor.

**14.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapic and imazapyr, and as component C) acetochlor.

**15.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole; as component B) two herbicides selected from the group including imazapyr, imazaquin, imazamethabenz-methyl, imazamox, imazapic and imazethapyr; and as component C) a herbicidal compound from the group C12.

**16.** A synergistic herbicidal mixture as claimed in claim 10 comprising, as component A) 4-[2-methyl-3-(4,5-dihydroisoxazol-3-yl) -4-methylsulfonyl-benzoyl]-1-methyl-5-hydroxy-1H-pyrazole, as component B) imazapyr and imazethapyr, and as component C) a benzothiadiazone or a triazine.

**17.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapyr and imazethapyr, and as component C) bentazone.

**18.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapyr and imazethapyr as component C) atrazine.

**19.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapic and imazapyr, and

as component C) a benzothiadiazone or a triazine.

**20.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapic and imazapyr, and as component C) bentazone.

**21.** A synergistic herbicidal mixture as claimed in claim 10 comprising, as component A) 4-[2-methyl-3-(4,5-dihydroisoxazol-3-yl)-4-methylsulfonyl-benzoyl]-1-methyl-5-hydroxy-1H-pyrazole, as component B) imazapic and imazapyr as component C) atrazine.

**22.** Synergistic herbicidal mixture as claimed in any of claims 1 to 21, wherein component A) and B) are present in a weight ratio of 1:0.001 to 1:500.

**23.** Synergistic herbicidal mixture as claimed in any of claims 1 to 21. wherein component A) and component C) are present in a weight ratio of 1:0.002 to 1:800.

**24.** A herbicidal composition comprising a herbicidally active amount of a synergistic herbicidal mixture as claimed in any of claims 1 to 23, at least one inert liquid and/or solid carrier and, if desired, at least one surfactant.

**25.** A process for the preparation of herbicidal compositions as claimed in claim 24, wherein component A), component B) and component C), at least one inert liquid and/or solid carrier and, if appropriate, a surfactant are mixed.

**26.** A method of controlling undesired vegetation, which comprises applying a synergistic herbicidal mixture as claimed in any of claims 1 to 23 before, during and/or after the emergence of undesired plants, it being possible for the herbicidally active compounds of components A), B) and, C) to be applied simultaneously or in succession.

**27.** A method of controlling undesired vegetation as claimed in claim 26, wherein the leaves of the crop plants and of the undesired plants are treated.

## Patentansprüche

**1.** Synergistische herbizide Mischung, umfassend

A) mindestens ein 3-heterocyclyl-substituiertes Benzoylderivat der Formel I

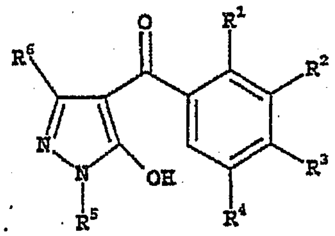

I

worin die Variablen die folgenden Bedeutungen haben:

$R^1$, $R^3$ sind Halogen, $C_1$-$C_6$-Alkyl, $C_1$-$C_6$-Halogen-alkyl, $C_1$-$C_6$-Alkoxy, $C_1$-$C_6$-Halogenalkoxy, $C_1$-$C_6$-Alkylthio, $C_1$-$C_6$-Alkylsulfinyl oder $C_1$-$C_6$-Alkylsulfonyl;
$R^2$ ist ein heterocyclischer Rest, ausgewählt aus der Gruppe: Isoxazol-3-yl, Isoxazol-4-yl, Isoxazol-5-yl, 4,5-Dihydroisoxazol-3-yl, 4,5-Dihydroisoxazol-4-yl und 4,5-Dihydroisoxazol-5-yl, wobei es möglich ist, dass die sechs genannten Radikale nicht substituiert oder durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio mono- oder polysubstituiert sind;
$R^4$ ist Wasserstoff, Halogen oder $C_1$-$C_6$-Alkyl;
$R^5$ ist $C_1$-$C_6$-Alkyl;
$R^6$ ist Wasserstoff oder $C_1$-$C_6$-Alkyl;

oder eines seiner umweltverträglichen Salze;
und
B) zwei Herbizide, ausgewählt aus der Gruppe, enthaltend Imazapyr, Imazaquin, Imazamethabenz-Methyl, Imazamox, Imazapic und Imazethapyr;
oder eines deren umweltverträglichen Salze;
und
C) mindestens eine herbizide Verbindung aus den Gruppen C9 oder C12:

C9 Lipidbiosynthese-Hemmer:
Anilide, Chloracetanilide, Thioharnstoffe, Benfuresat oder Perfluidon;
C12 Photosynthese-Hemmer:
Propanil, Pyridat, Pyridafol, Benzothiadiazinone, Dinitrophenole, Dipyridylene, Harnstoffe, Phenole, Chloridazon, Triazine, Triazinone, Uracile oder Biscarbamate;

oder deren umweltverträglichen Salze
in einer synergistisch wirksamen Menge.

**2.** Synergistische herbizide Mischung nach Anspruch 1, umfassend als Komponente A) ein 3-heterocyclyl-substituiertes Benzoylderivat der Formel I, worin $R^4$ Wasserstoff ist.

**3.** Synergistische herbizide Mischung nach einem der Ansprüche 1 bis 2, umfassend als Komponente A) ein 3-heterocyclyl-substituiertes Benzoylderivat der Formel I, worin

$R^1$ Halogen, $C_1$-$C_6$-Alkyl oder $C_1$-$C_6$-Alkylsulfonyl ist;
$R^3$ Halogen oder $C_1$-$C_6$-Alkylsulfonyl ist.

**4.** Synergistische herbizide Mischung nach einem der Ansprüche 1 bis 3, umfassend als Komponente A) ein 3-heterocyclyl-substituiertes Benzoylderivat der Formel I, worin

$R^2$ ein heterocyclischer Rest ist, ausgewählt aus der Gruppe: Isoxazol-3-yl, Isoxazol-5-yl und 4,5-Dihydroisoxazol-3-yl, wobei es möglich ist, dass die drei genannten Radikale nicht substituiert oder durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio mono- oder polysubstituiert sind;

**5.** Synergistische herbizide Mischung nach einem der Ansprüche 1 bis 4, umfassend als Komponente A) ein 3-heterocyclyl-substituiertes Benzoylderivat der Formel I, worin

$R^2$ Isoxazol-5-yl, 3-Methylisoxazol-5-yl, 4,5-Dihydroisoxazol-3-yl, 5-Methyl-4,5-dihydro-isoxazol-3-yl, 5-Ethyl-4,5-dihydroisoxazol-3-yl oder 4,5-Dimethyl-4,5-dihydroisoxazol-3-yl ist.

**6.** Synergistische herbizide Mischung nach einem der Ansprüche 1 bis 5, umfassend als Komponente A) 4-[2-Chlor-3-(4,5-dihydroisoxazol-3-yl)-4-methyl-sulfonylbenzoyl]-1-methyl-5-hydroxy-1H-pyrazol.

**7.** Synergistische herbizide Mischung nach einem der Ansprüche 1 bis 5, umfassend als Komponente A) 4-[2-Methyl-3-(4,5-dihydroisoxazol-3-yl)-4-methyl-sulfonylbenzoyl]-1-methyl-5-hydroxy-1H-pyrazol.

**8.** Synergistische herbizide Mischung nach einem der Ansprüche 1 bis 7, umfassend als Komponente B Imazapyr und Imazethapyr.

**9.** Synergistische herbizide Mischung nach einem der Ansprüche 1 bis 7, umfassend als Komponente B Imazapic und Imazapyr.

**10.** Synergistische herbizide Mischung nach einem der Ansprüche 1 bis 9, umfassend als Komponente C) mindestens eine herbizide Verbindung der Gruppen C9 oder C12:
C9 Lipidbiosynthese-Hemmer:

- Anilide:
Anilofos oder Mefenacet;

- Chloracetanilide:
Dimethenamid, S-Dimethenamid, Acetochlor, Alachlor, Butachlor, Butenachlor, Diethatyl-Ethyl, Dimethachlor, Metazachlor, Metolachlor, S-Metolachlor, Pretilachlor, Propachlor, Prynachlor, Terbuchlor, Thenylchlor oder Xylachlor;
- Thioharnstoffe:
Butylat, Cycloat, Diallat, Dimepiperat, EPTC, Esprocarb, Molinat, Pebulat, Prosulfocarb, Thiobencarb (Benthiocarb), Triallat oder Vernolat; oder
- Benfuresat oder Perfluidon;

C12 Photosynthese-Hemmer:

- Propanil, Pyridat oder Pyridafol;
- Benzothiadiazinone:
Bentazon;
- Dinitrophenole:
Bromfenoxim, Dinoseb, Dinoseb-Acetat, Dinoterb oder DNOC;
- Dipyridylene:
Cyperquat-Chlorid, Difenzoquat-Methylsulfat, Diquat oder Paraquat-Dichlorid;
- Harnstoffe:
Chlorbromuron, Chlortoluron, Difenoxuron, Dimefuron, Diuron, Ethidimuron, Fenuron, Fluometuron, Isoproturon, Isouron, Linuron, Methabenzthiazuron, Methazol, Metobenzuron, Metoxuron, Monolinuron, Neburon, Siduron oder Tebuthiuron;
- Phenole:
Bromoxynil oder Ioxynil;
- Chloridazon;
- Triazine:
Ametryn, Atrazin, Cyanazin, Desmetryn, Dimethamethryn, Hexazinon, Prometon, Prometryn, Propazin, Simazin, Simetryn, Terbumeton, Terbutryn, Terbutylazin oder Trietazin;
- Triazinone:
Metamitron oder Metribuzin;
- Uracile:
Bromacil, Lenacil oder Terbacil; oder
- Biscarbamate:
Desmedipham oder Phenmedipham;

oder deren umweltverträgliche Salze.

**11.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) zwei Herbizide, ausgewählt aus der Gruppe, enthaltend Imazapyr, Imazaquin, Imazamethabenz-Methyl, Imazamox, Imazapic und Imazethapyr; und als Komponente C) eine herbizide Verbindung aus der Gruppe C9.

**12.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapyr und Imazethapyr oder Imazapic und Imazapyr und als Komponente C) eine Chloracetanilid.

**13.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapyr und Imazethapyr, und als Komponente C) Acetochlor.

**14.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapic und Imazapyr, und als Komponente C) Acetochlor.

**15.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) zwei Herbizide, ausgewählt aus der Gruppe, enthaltend Imazapyr, Imazaquin, Imazamethabenz-Methyl, Imazamox, Imazapic und Imazethapyr; und als Komponente C) eine herbizide Verbindung aus der Gruppe C12.

**16.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapyr und Imazethapyr, und als Komponente C) ein Benzothiadiazon oder ein Triazin.

**17.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapyr und Imazethapyr, und als Komponente C) Bentazon.

**18.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapyr und Imazethapyr, und als Komponente C) Atrazin.

**19.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol; als Komponente B) Imazapic und Imazapyr, und als Komponente C) ein Benzothiadiazon oder ein Triazin.

**20.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol, als Komponente B) Imazapic und Imazapyr und als Komponente C) Bentazon.

**21.** Synergistische herbizide Mischung nach Anspruch 10, umfassend als Komponente A) 4-[2-Methyl-3-(4,5-dihydroisoxazol-3-yl)-4-methylsulfonylbenzoyl]-1-methyl-5-hydroxy-1H-pyrazol, als Komponente B) Imazapic und Imazapyr und als Komponente C) Atrazin.

**22.** Synergistische herbizide Mischung nach einem der Ansprüche 1 bis 21, wobei Komponente A) und B) in einem Gewichtsverhältnis von 1:0,001 bis 1:500 vorliegen.

**23.** Synergistische herbizide Mischung nach einem der Ansprüche 1 bis 21, wobei Komponente A) und Komponente C) in einem Gewichtsverhältnis von 1:0,002 bis 1:800 vorliegen.

**24.** Herbizide Zusammensetzung, umfassend eine Herbizid-wirksame Menge einer synergistischen herbiziden Mischung nach einem der Ansprüche 1 bis 23, mindestens einen inerten flüssigen und/oder festen Träger und, falls erwünscht, mindestens ein Tensid.

**25.** Verfahren zur Herstellung von herbiziden Zusammensetzungen nach Anspruch 24, wobei Komponente A), Komponente B), Komponente C), mindestens ein inerter flüssiger und/oder fester Träger und, falls angebracht, ein Tensid vermischt werden.

**26.** Verfahren zur Regulierung unerwünschten Pflanzenwuchses, umfassend das Aufbringen einer synergistischen herbiziden Mischung nach einem der Ansprüche 1 bis 23 vor, während und/oder nach dem Sichtbarwerden unerwünschter Pflanzen, wobei es möglich ist, dass die herbizid wirksamen Verbindungen von Komponenten A), B) und C) gleichzeitig oder nacheinander aufgebracht werden.

**27.** Verfahren zur Regulierung unerwünschten Pflanzenwuchses nach Anspruch 26, wobei die Blätter der Kulturpflanzen und der unerwünschten Pflanzen behandelt werden.

**Revendications**

**1.** Mélange herbicide synergétique comprenant :

A) au moins un dérivé de benzoyle substitué en 3-hétérocyclyle selon la formule I

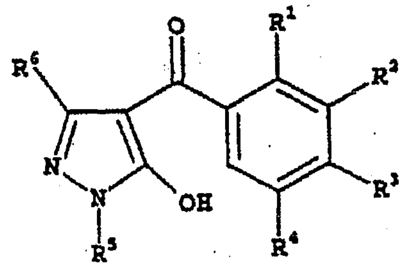

I

dans laquelle les variables ont les significations suivantes :

$R^1$, $R^3$ sont un halogène, un alkyle en $C_1$-$C_6$, un halogénoalkyle en $C_1$-$C_6$, un alcoxy en $C_1$-$C_6$, un halogénoalcoxy en $C_1$-$C_6$, un $C_1$-$C_6$-alkylthio, un $C_1$-$C_6$-alkylsulfinyle ou un $C_1$-$C_6$-alkylsulfonyle ;
$R^2$ est un radical hétérocyclique choisi dans le groupe suivant : isoxazol-3-yle, isoxazol-4-yle, isoxazol-5-yle, 4,5-dihydroisoxazol-3-yle, 4,5-dihydro-isoxazol-4-yle et 4,5-dihydroisoxazol-5-yle, les six radicaux mentionnés pouvant être non substitués, monosubstitués ou polysubstitués par un halogène, un alkyle en $C_1$-$C_4$, un alcoxy en $C_1$-$C_4$, un halogénoalkyle en $C_1$-$C_4$, un halogénoalcoxy en $C_1$-$C_4$ ou un $C_1$-$C_4$-alkylthio ;
$R^4$ est un hydrogène, un halogène ou un alkyle en $C_1$-$C_6$ ;
$R^5$ est un alkyle en $C_1$-$C_6$ ;
$R^6$ est un hydrogène ou un alkyle en $C_1$-$C_6$ ;

ou l'un de ses sels compatibles du point de vue de l'environnement ;
B) deux herbicides choisis dans le groupe comprenant l'imazapyr, l'imazaquin, l'imaza-méthabenz-méthyle, l'imazamox, l'imazapic et l'imazéthapyr ;
ou l'un de ses sels compatibles du point de vue de l'environnement ;
et
C) au moins un composé herbicide dans les groupes C9 ou C12 :

C9 des inhibiteurs de la biosynthèse des lipides :
des anilides, des chloroacétanilides, des thio-urées, le benfuresate ou la perfluidone ;
C12 des inhibiteurs de la photosynthèse :
le propanile, le pyridate, le pyridafol, des benzothiadiazinones, des dinitrophénols, des dipyridylènes, des urées, des phénols, le chloridazon, des triazines, des triazinones, des uraciles ou des biscarbamates ;

ou leurs sels compatibles du point de vue de l'environnement,

en une quantité efficace du point de vue synergétique.

**2.** Mélange herbicide synergétique selon la revendication 1, qui comprend, comme composant A), un dérivé de benzoyle substitué en 3-hétérocyclyle selon la formule I, où $R^4$ est un hydrogène.

**3.** Mélange herbicide synergétique selon l'une quelconque des revendications 1 à 2, qui comprend, comme composant A), un dérivé de benzoyle substitué en 3-hétérocyclyle selon la formule I, où

$R^1$ est un halogène, un alkyle en $C_1$-$C_6$ ou un $C_1$-$C_6$-alkylsulfonyle ;
$R^3$ est un halogène ou un $C_1$-$C_6$-alkylsulfonyle.

**4.** Mélange herbicide synergétique selon l'une quelconque des revendications 1 à 3, qui comprend, comme composant A), un dérivé de benzoyle substitué en 3-hétérocyclyle selon la formule I, où
$R^2$ est un radical hétérocyclique choisi dans le groupe suivant : isoxazol-3-yle, isoxazol-5-yle et 4,5-dihydroisoxazol-3-yle, les trois radicaux mentionnés pouvant être non substitués, monosubstitués ou polysubstitués par un halogène, un alkyle en $C_1$-$C_4$, un alcoxy en $C_1$-$C_4$, un halogénoalkyle en $C_1$-$C_4$, un halogénoalcoxy en $C_1$-$C_4$ ou un $C_1$-$C_4$-alkylthio.

**5.** Mélange herbicide synergétique selon l'une quelconque des revendications 1 à 4, qui comprend, comme composant A), un dérivé de benzoyle substitué en 3-hétérocyclyle selon la formule I, où

$R^2$ est l'isoxazol-5-yle, le 3-méthylisoxazol-5-yle, le 4,5-dihydroisoxazol-3-yle, le 5-méthyl-4,5-dihydroisoxazol-3-yle, le 5-éthyl-4,5-dihydroisoxazol-3-yle ou le 4,5-diméthyl-4,5-dihydroisoxazol-3-yle.

**6.** Mélange herbicide synergétique selon l'une quelconque des revendications 1 à 5, qui comprend comme composant A), le 4-[2-chloro-3-(4,5-dihydroisoxazol-3-yl)-4-méthylsulfonylbenzoyl]-1-méthyl-5-hydroxy-1H-pyrazole.

**7.** Mélange herbicide synergétique selon l'une quelconque des revendications 1 à 5, qui comprend, comme composant A), le 4-[2-méthyl-3-(4,5-dihydroisoxazol-3-yl)-4-méthylsulfonylbenzoyl]-1-méthyl-5-hydroxy-1H-pyrazole.

**8.** Mélange herbicide synergétique selon l'une quelconque des revendications 1 à 7, qui comprend, comme composant B), l'imazapyr et l'imazéthapyr.

**9.** Mélange herbicide synergétique selon l'une quelconque des revendications 1 à 7, qui comprend, comme composant B), l'imazapic et l'imazapyr.

**10.** Mélange herbicide synergétique selon l'une quelconque des revendications 1 à 9, qui comprend, comme composant C), au moins un composé herbicide choisi dans les groupes C9 ou C12 :
C9 inhibiteurs de la biosynthèse des lipides :

- anilides :
anilofos ou ménefacet ;
- chloroacétanilides :
diméthénamide, S-diméthénamide, acéto-chlore, alachlore, butachlore, buténa-chlore, diéthatyléthyle, diméthachlore, métazachlore, métolachlore, S-métolachlore, prétilachlore, propachlore, prynachlore, terbuchlore, thénylchlore ou xylachlore ;
- thio-urées :
butylate, cycloate, di-allate, dimepiperate, EPTC, esprocarb, molinate, pebulate, prosulfocarb, thiobencarb (benthiocarb), triallate ou vernolate ;
ou
- benfuresate ou perfluidone ;

C12 inhibiteurs de la photosynthèse :

- propanile, pyridate ou pyridafol ;
- benzothiadiazinones : bentazone ;
- dinitrophénols :
bromofénoxime, dinoseb, dinoseb-acétate, dinoterb ou DNOC ;
- dipyridylènes :
chlorure de cyperquat, méthylsulfate de difenzoquat, dichlorure de diquat ou dichlorure de paraquat ;
- urées :
chlorbromuron, chlorotoluron, difenoxuron, dimefuron, diuron, éthidimuron, fenuron, fluometuron, isoproturon, isoeuron, linuron, méthabenzothiazuron, méthazole, metobenzuron, metoxuron, monolinuron, neburon, siduron ou tébuthiuron ;
- phénols :
bromoxynile ou ioxynile ;
- chloridazon ;
- triazines :
amétryne, atrazine, cyanazine, desmetryne, diméthaméthryne, hexazinone, prometon, prométryne, propazine, simazine, simétryne, terbumeton, terbumétryne, terbutylazine ou trietazine ;
- triazinones :
métamitron ou métribuzine ;
- uraciles :
bromacile, lenacile ou terbacile ; ou
- biscarbamates :
desmedipham ou phenmedipham ;

ou leurs sels compatibles du point de vue de l'environnement.

**11.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), deux herbicides choisis parmi le groupe comprenant l'imazapyr, l'imazaquin, l'imazaméthabenz-méthyle, l'imazamox, l'imazapic et l'imazéthapyr ; et, comme composant C), un composé herbicide parmi le groupe C9.

**12.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapyr et l'imazéthapyr ou l'imazapic et l'imazapyr ; et, comme composant C), un chloroacétanilide.

**13.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapyr et l'imazéthapyr ; et, comme composant C), l'acétochlore.

**14.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapic et l'imazapyr ; et, comme composant C), l'acétochlore.

**15.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), deux herbicides choisis parmi le groupe comprenant l'imazapyr, l'imazaquin, l'imazaméthabenz-méthyle, l'imazamox, l'imazapic et l'imazéthapyr ; et, comme composant C), un composé herbicide parmi le groupe C12.

**16.** Mélange herbicide synergétique selon la - revendication 10, qui comprend, comme composant A), le 4-[2-méthyl-3-(4,5-dihydroisoxazol-3-yl)-4-méthylsulfonylbénzoyl]-1-méthyl-5-hydroxy-1H-pyrazole ; comme composant B), l'imazapyr et l'imazéthapyr ; et, comme composant C), une benzothiadiazone ou une triazine.

**17.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapyr et l'imazéthapyr ; et, comme composant C), la bentazone.

**18.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapyr et l'imazéthapyr ; et, comme composant' C), l'atrazine.

**19.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole ; comme composant B), l'imazapic et l'imazapyr ; et, comme composant C), une benzothiadiazone ou une triazine.

**20.** Mélange herbicide synergétique selon la revendication 10, qui comprend, comme composant A), le 4-[2-méthyl-3-(4, 5-dihydroisoxazol-3-yl) -4-méthylsulfonylbenzoyl]-1-méthyl-5-hydroxy-1H-pyrazole, comme composant B), l'imazapic et l'imazapyr ; et, comme composant C), la bentazone.

**21.** Mélange herbicide synergétique selon la revendication 10, qui comprend, comme composant A), le 4-[2-méthyl-3-(4,5-dihydroisoxazol-3-yl)-4-méthylsulfonylbenzoyl]-1-méthyl-5-hydroxy-1H-pyrazole, comme composant B), l'imazapic et l'imazapyr ; et, comme composant C), l'atrazine.

**22.** Mélange herbicide synergétique selon l'une quelconque des revendications 1 à 21, dans lequel les composants A) et B) sont présents selon un rapport de poids allant de 1:0,001 à 1:500.

**23.** Mélange herbicide synergétique selon l'une quelconque des revendications 1 à 21, dans lequel les composants A) et C) sont présents selon un rapport de poids allant de 1:0,002 à 1:800.

**24.** Composition herbicide qui comprend une quantité herbicidement active d'un mélange herbicide synergétique selon l'une quelconque des revendications 1 à 23, au moins un liquide inerte et/ou un support solide et, si on le souhaite, au moins un tensioactif.

**25.** Procédé pour la préparation de compositions herbicides selon la revendication 24, dans laquelle sont mélangés le composant A), le composant B), le composant C), au moins un liquide inerte et/ou un support solide et, si on le

souhaite, un tensioactif.

**26.** Méthode de lutte contre les végétaux indésirables, qui comprend l'application d'un mélange herbicide synergétique selon l'une quelconque des revendications 1 à 23 ci-dessus, pendant et/ou après l'émergence des végétaux indésirables, les composés herbicidement actifs des composants A), B) et C) pouvant être appliqués en même temps ou successivement.

**27.** Méthode de lutte contre les végétaux indésirables selon la revendication 26, dans laquelle les feuilles des cultures et des végétaux indésirables sont traitées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9626206 A
- WO 9741116 A
- WO 9741117 A
- WO 9741118 A
- WO 9831681 A